# EUROPÄISCHE PATENTSCHRIFT

(11) **EP 4 480 299 B1**
(45) Veröffentlichungstag und Bekanntmachung des Hinweises auf die Patenterteilung: **10.06.2026**
(21) Anmeldenummer: 24168721.9
(22) Anmeldetag: 05.04.2024
(51) Int. Cl.: A01D 45/02, A01D 57/01

(54) **VORSATZGERÄT ZUM ERNTEN VON IN REIHEN STEHENDEM ERNTEGUT**
AUXILIARY DEVICE FOR HARVESTING CROPS ARRANGED IN ROWS
APPAREIL ADAPTABLE POUR LA RÉCOLTE DE PRODUITS AGRICOLES EN RANGÉES

(30) Priorität: 21.06.2023 DE 102023116238
(43) Veröffentlichungstag der Anmeldung: 25.12.2024
(73) Patentinhaber: CLAAS Selbstfahrende Erntemaschinen GmbH, 33428 Harsewinkel (DE)
(72) Erfinder: Herter, Felix, 33428 Harsewinkel (DE); Benes, Jason, Nebraska, 68462 (US); Nemet, Tamas, 5400 Mezotúr (HU); Bodi, Laszlo, Omaha, Nebraska, 68135 (US)
(74) Vertreter: CLAAS Gruppe

(56) Entgegenhaltungen:
- EP-A1- 0 848 898
- EP-A1- 3 090 619
- US-A1- 2019 230 841
- US-A1- 2022 000 029

## Beschreibung

Die vorliegende Erfindung betrifft ein Vorsatzgerät zum Ernten von in Reihen stehendem Erntegut gemäß dem Oberbegriff des unabhängigen Patentanspruchs 1 sowie eine landwirtschaftliche Erntemaschine mit einem solchen Vorsatzgerät gemäß dem Oberbegriff des unabhängigen Patentanspruchs 12.

Vorsatzgeräte eingangs genannter Art kommen zum Einsatz, um in Reihen stehendes, stängeliges Erntegut, wie Mais, Sonnenblumen oder dergleichen, zu ernten. Die Vorsatzgeräte weisen Erntegutaufnahme- und/oder Ernteguteinzugsvorrichtungen auf, die paarweise angeordnete Pflückwalzen umfassen, die jeweils einen Pflückspatz zwischen sich ausbilden. Das in Reihen mit bestimmten Abständen zueinander angeordnete stängelige Erntegut wird den an dem Erntevorsatz achsparallel zueinander angeordneten Pflückeinheiten zugeführt, welche sich im Wesentlichen parallel zu den Reihen mit Erntegut erstrecken. Zur präzisen und möglichst verlustfreien Zuführung des stängeligen Erntegutes, das heißt ohne Verluste der Fruchtstände beziehungsweise Spritzkornverluste, sind so genannte Abdeckelemente oberhalb der Pflückeinheiten angeordnet, welche aus Abdeckspitzen und Abdeckhauben ausgebildet sind und die Pflückeinheiten abschnittsweise abdecken. In einer Betriebsstellung des Vorsatzgerätes sind die vorderen Abdeckspitzen im Wesentlichen fluchtend mit einer hinter jeweils einer Abdeckspitzen befindlichen Abdeckhaube angeordnet. Die vorderen Abdeckspitzen dienen dazu die in Reihen angeordneten Pflanzen hin zu den Pflückeinheiten zu leiten. Zwischen zwei benachbarten Abdeckhauben ist ein Kanal ausgebildet, durch den die Pflückeinheiten die Pflanzen hindurchführen. Die Früchte werden hier mittels Pflückerplatten von den Stängeln getrennt und die verbleibenden Früchte in den Kanälen hin zu einem hinter den Pflückeinheiten angeordneten Fördermittel geleitet. Üblicherweise weist die Oberfläche der Abdeckhaube eine glatte sowie konvexe Oberfläche auf. Das Erntegut wird in den Kanälen entlang dieser Oberfläche hin zu dem Fördermittel befördert.

Die Abdeckspitzen erstrecken sich üblicherweise über das vordere Ende der Pflückeinheiten hinaus, um die in Reihen angeordneten Pflanzen hin zu den Pflückeinheiten effektiv zu leiten. Diese vergrößerte Länge ist jedoch nachteilig, wenn der Mähdrescher von einer Stelle zu einer anderen Stelle, beispielsweise von einem Hof zum Feld oder von einem Feld zu einem anderen Feld, bewegt wird und das Vorsatzgerät hierzu von der Erntemaschine, beispielsweise mittels eines Transportwagens, auf öffentlichen Straßen und Wegen transportiert werden muss. Während des Transportes des Vorsatzgerätes, insbesondere dann, wenn dieses mittels eines Transportwagens von der Erntemaschine transportiert wird, sind die Abdeckspitzen in Fahrzeugbreitenrichtung ausgerichtet, wobei die gesetzlichen Bestimmungen, insbesondere die für die zulässige Breite, auf öffentlichen Straßen und Wegen einzuhalten ist.

Um dieser zwingend zu erfüllenden Anforderung Rechnung tragen zu können, ist es bekannt die Abdeckelemente insgesamt bzw. die Abdeckspitze im Einzelnen in eine so genannte Transportstellung zu verbringen, in der die Abdeckspitze beim Transport weniger weit über das vordere Ende der Pflückeinheiten hinausragt.

Aus der US 6,513,313 B1 ist beispielsweise ein Vorsatzgerät zum Ernten von in Reihen stehendem Erntegut bekannt, bei welchem die Abdeckhaube und die Abdeckspitze gemeinsam von den Reiheneinheiten angehoben werden, um einen Überstand der Abdeckspitzen zu reduzieren.

Zwar wird hierdurch der Überstand der Abdeckspitzen reduziert, jedoch ist eine solchen Ausgestaltung der Abdeckelemente dahingehend als nachteilig anzusehen, dass erhebliche Kräfte von einem Bediener aufgebracht werden müssen, um sowohl die Abdeckspitze als auch die Abdeckhaube gemeinsam in die Transportstellung zu verbringen. Weiterhin sind die diversen Anbindungspunkte von Abdeckhaube/Tragstruktur und Abdeckspitze/Abdeckhaube während eines Transports des Vorsatzgerätes erheblichen Kräften ausgesetzt, wodurch das Abdeckelement derart ausgelegt seien muss, dass es solche Kräfte in der Transportstellung aufnehmen kann, ohne dass es zu einer Beschädigung des Abdeckelements bzw. der Anbindungspunkte kommt. Weiterhin ist eine komplexe Mechanik erforderlich, um sowohl die Abdeckspitze als auch die Abdeckhaube gleichzeitig in die Transportstellung zu verbringen und dort zu fixieren.

Weiterhin sind aus EP 3 090 619 A1 sowie EP 0 848 898 A1 jeweils Vorsatzgeräte zum Ernten von in Reihen stehendem Erntegut mit Arretiereinrichtungen zur Fixierung der vorderen Abdeckspitzen der Abdeckelemente in einer Transportstellung bekannt.

Ausgehend hiervon ist es demnach die Aufgabe der vorliegenden Erfindung die beschriebenen Nachteile des Standes der Technik auszuräumen und insbesondere ein Vorsatzgerät zum Ernten von in Reihen stehendem Erntegut derart auszugestalten und weiterzubilden, dass die Abdeckelemente eine Transportstellung zwecks Einhaltung der gesetzlichen Anforderungen während des Transports einnehmen können, wobei ein Verbringen und Sichern der Abdeckelemente in der Transportstellung besonders unkompliziert, wenig kraftintensiv gleichzeitig allerdings zuverlässig erfolgt.

Diese Aufgabe wird erfindungsgemäß durch die Merkmale des unabhängigen Patentanspruchs 1 gelöst, wobei vorteilhafte Weiterbildungen des erfindungsgemäßen Vorsatzgerätes Gegenstand der entsprechenden abhängigen Patentansprüche 2 bis 11 sind.

Demnach betrifft die vorliegende Erfindung ein Vorsatzgerät zum Ernten von in Reihen stehendem Erntegut. Das Vorsatzgerät umfasst mehrere nebeneinander angeordnete Pflückeinheiten sowie mehrere nebeneinander angeordnete Abdeckelemente, wobei jeweils ein Abdeckelement einen Abstand zwischen zwei nebeneinander angeordneten Pflückeinheiten abdeckt. Jedes Abdeckelement umfasst eine vordere Abdeckspitze und eine hintere Abdeckhaube, wobei die Abdeckspitze schwenkbar an der Abdeckhaube gelagert ist und relativ zur Abdeckhaube zwischen einer Arbeitsstellung und einer Transportstellung verschwenkbar ist. Das Vorsatzgerät ist dadurch gekennzeichnet, dass jedes Abdeckelement eine Arretiereinrichtung umfasst, die dazu ausgebildet ist, die Abdeckspitze in ihrer Transportstellung zu fixieren. Die Arretiereinrichtung umfasst dabei ein federbelastetes Arretierelement, welches der Abdeckhaube zugeordnet ist und welches in der Transportstellung der Abdeckspitze in eine der Abdeckspitze zugeordnete Arretieraufnahme eingreift.

Die erfindungsgemäße Ausgestaltung des Vorsatzgerätes mit einer zwischen einer Arbeitsstellung in einer Transportstellung verschwenken Abdeckspitze und einer dem Abdeckelements zugeordneten Arretiereinrichtung zum Fixieren der Abdeckspitze in ihrer Transportstellung hat eine Reihe von Vorteilen. Einerseits kann durch diese konstruktive Ausgestaltung des Vorsatzgerätes bzw. des Abdeckelements erzielt werden, dass das Vorsatzgerät eine für einen Transportvorgang geeignete Ausgestaltung annehmen kann, die dazu führt, dass die gesetzlichen Anforderungen während des Transports eingehalten werden, die Verlagerung für einen Transportvorgang dabei allerdings mit wenig Kraftaufwand und unkompliziert erfolgen kann, und andererseits, dass die Abdeckspitze zuverlässig und lösbar in der Transportstellung fixiert wird, sodass die Abdeckspitze schnell aus ihrer Arbeitsstellung in ihre Transportstellung und umgekehrt auch schnell aus ihrer Transportstellung wieder in ihre Arbeitsstellung verbracht werden kann. Zudem wird die Abdeckspitze durch die Arretiereinrichtung während des Transportvorgangs seitlich stabilisiert und ein Teil der auf die Abdeckspitze wirkenden Kräfte von der Arretiereinrichtung aufgenommen, sodass der Lagerpunkt von Abdeckspitze und Abdeckhaube nicht übermäßig belastet wird.

Gemäß einer vorteilhaften Weiterbildung der Erfindung ist vorgesehen, dass die Abdeckhaube zumindest bereichsweise in die Abdeckspitze hineinragt, wobei die Arretiereinrichtung im Überlappungsbereich von Abdeckhaube und Abdeckspitze angeordnet ist.

Durch die Anordnung der Arretiereinrichtung im Überlappungsbereich von Abdeckhaube und Abdeckspitze wird eine besonders bauraumsparende Positionierung der Arretiereinrichtung realisiert, die eine gute Zugänglichkeit für den Bediener gewährleistet, wenn dieser die Abdeckspitze aus ihrer Transportstellung zurück in die Arbeitsstellung verlagern möchte. Weiterhin sorgt die Anordnung im Überlappungsbereich dafür, dass die Arretiereinrichtung nahe am Lagerpunkt von Abdeckspitze und Abdeckhaube angeordnet ist, wodurch die Aufnahme eines Teils der auf die Abdeckspitze und somit auf den Lagerpunkt von Abdeckspitze und Abdeckhaube wirkenden Kräfte während des Transportvorgangs möglich wird.

Erfindungsgemäß ist vorgesehen, dass die Arretiereinrichtung ein Aufnahmeelement umfasst, das innenseitig an der Abdeckspitze angeordnet ist, wobei das Aufnahmeelement die Arretieraufnahme umfasst. Das Aufnahmeelement ist dazu ausgebildet, das federbelastete Arretierelement bei einem Verschwenken der Abdeckspitze aus ihrer Arbeitsstellung in ihre Transportstellung zumindest abschnittsweise in Richtung der Arretieraufnahme seitlich zu führen und entgegen der Federkraft zu belasten.

Die Verwendung eines zusätzlichen Aufnahmeelements an der Innenseite der Abdeckspitze sorgt einerseits für die zuverlässige Führung und Bewegung des federbelasteten Arretierelements, die schlussendlich beim Erreichen der Transportstellung der Abdeckspitze zu einem rastenden Eingriff des federbelasteten Arretierelements in der Arretieraufnahme sorgt. Das federbelastete Arretierelement gleitet somit bei einem Verschwenken der Abdeckspitze aus der Arbeitsstellung in die Transportstellung zeitweise, im Wesentlichen unmittelbar vor Erreichen der Arretieraufnahme, über das Aufnahmeelement und wird dabei entsprechend geführt und bewegt, sodass die Arretierung bei Erreichen der Transportstellung erfolgt. Neben dieser Funktion der Führung und Bewegung des federbelasteten Arretierelements kann durch die Verwendung des zusätzlichen Aufnahmeelements sichergestellt werden, dass die Innenseite der Abdeckspitze nicht unnötig belastet wird und somit verschleißt.

Vorzugsweise ist vorgesehen, dass das Aufnahmeelement gabelförmig ausgebildet ist, wobei das Aufnahmeelement einen ersten und einen zweiten Schenkel umfasst, die über einen Steg miteinander verbunden sind. Die Arretieraufnahme ist dabei im Steg des Aufnahmeelements mittig zwischen den Schenkeln ausgebildet. Das Aufnahmeelement umfasst zur Führung des federbelasteten Arretierelements in Richtung der Arretieraufnahme und zur Belastung des federbelasteten Arretierelements entgegen der Federkraft eine zwischen den Schenkeln des Aufnahmeelements relativ zu diesen geneigte Lasche.

Die gabelförmige Ausgestaltung des zusätzlichen Aufnahmeelements sorgt in besonders vorteilhafter Weise für die zuvor beschriebene Führung und Bewegung des federbelasteten Arretierelements, da über die Kombination aus zwei Schenkeln, einer zu diesen geneigten Lasche und der mittigen Ausbildung der Arretieraufnahme in dem Steg gleichzeitig die Funktionen seitliche Führung des federbelasteten Arretierelements in Richtung Arretieraufnahme und Bewegung des federbelasteten Arretierelements entgegen der Federkraft realisiert werden. Ferner erlaubt diese konstruktive Ausgestaltung des Aufnahmeelements eine besonders unkomplizierte Anbringung an der Innenseite der Abdeckspitze, die wahlweise form-, kraft- und/oder stoffschlüssig, vorzugsweise über die Schenkel und den Steg, erfolgen kann.

Gemäß einer vorteilhaften Weiterbildung der Erfindung ist vorgesehen, dass die Abdeckspitze innenseitig bereichsweise eine Formgebung aufweist, in der das federbelastete Arretierelement in der Arbeitsstellung der Abdeckspitze angeordnet ist. Die Formgebung ist derart ausgestaltet, dass das federbelastete Arretierelement bei einem Verschwenken der Abdeckspitze aus ihrer Arbeitsstellung in ihre Transportstellung zumindest abschnittsweise in Richtung der Arretieraufnahme seitlich führbar ist.

Vorzugsweise ist vorgesehen, dass die Formgebung in Gestalt einer Nut ausgeführt ist.

Die zusätzliche Formgebung an der Innenseite der Abdeckspitze sorgt dafür, dass das federbelastete Arretierelement zu Beginn des Schwenkvorgangs der Abdeckspitze von der Arbeitsstellung in die Transportstellung und umgekehrt seitlich in Richtung der Arretieraufnahme geführt wird. Neben dieser Führungsfunktion kann die Formgebung ferner einen Anschlag bilden, an dem das federbelastete Arretierelement in einer eingestellten minimalen Arbeitsstellung der Abdeckspitze anliegt. Hierdurch kann, insebsondere bei der Montage des Abdeckelements, sichergestellt werden, dass sich die Abdeckspitze nicht unterhalb dieser minimalen Arbeitsstellung relativ zur Abdeckhaube verschwenken kann und gleichzeitig durch die seitliche Führung nicht seitlich verlagern kann, was zu einer Reduzierung einer Fehlpositionierung während der Montage des Abdeckelements und somit insgesamt zu einer vereinfachten Montage des Abdeckelements führt.

Weiter vorzugsweise ist vorgesehen, dass die Formgebung an der Innenseite der Abdeckspitze mit der Lasche des an der Innenseite der Abdeckspitze angeordneten Aufnahmeelements fluchtet.

Hierdurch wird bei einem Verschwenken der Abdeckspitze aus ihrer Arbeitsstellung in ihre Transportstellung zuverlässig sichergestellt, dass das federbelastete Arretierelement auf die Lasche trifft und somit entgegen der Federkraft bewegt wird, wodurch der rastende Eingriff des federbelasteten Arretierelements in die Arretieraufnahme sichergestellt wird. Zusätzlich wird das federbelastete Arretierelement entlang der gesamten Schwenkbewegung der Abdeckspitze zuverlässig seitlich geführt.

Gemäß einer vorteilhaften Weiterbildung der Erfindung ist vorgesehen, dass das federbelastete Arretierelement zum Lösen der Arretiereinrichtung in der Transportstellung der Abdeckspitze einen Betätigungsabschnitt umfasst.

Vorzugsweise ist vorgesehen, dass der Betätigungsabschnitt als Handhebel ausgebildet ist.

Hierdurch kann der Bediener besonders einfach die durch die Arretiereinrichtung erzielte Arretierung der Abdeckspitze in der Transportstellung lösen und die Abdeckspitze wieder in ihre Arbeitsstellung verbringen.

Gemäß einer vorteilhaften Weiterbildung der Erfindung ist vorgesehen, dass das federbelastete Arretierelement aus einem von einer Spiralfeder umgebenen Bolzen ausgebildet ist.

Die Ausgestaltung des federbelasteten Arretierelements in Gestalt einer einen Bolzen umgebenen Spiralfeder schafft eine besonders bauraumsparende Lösung einer Arretiereinrichtung, die allerdings sicherstellt, dass stets eine stabile und sichere Arretierung der Abdeckspitze in der Transportstellung gewährleistet ist.

Gemäß einer vorteilhaften Weiterbildung der Erfindung ist vorgesehen, dass jedes Abdeckelement einen Tragrahmen umfasst, der an einer Rahmenstruktur des Vorsatzgerätes schwenkbar zwischen einer Arbeitsstellung und einer Wartungsstellung gelagert ist, wobei die Abdeckhaube an dem Tragrahmen fixiert ist.

Der Tragrahmen, an dem die Abdeckhaube fixiert ist, sorgt dafür, dass das Abdeckelements insgesamt die erforderliche Stabilität und Steifigkeit aufweist, die einen ordnungsgemäßen Betrieb des Vorsatzgerätes sowohl in der Arbeitsstellung als auch in der Transportstellung gewährleistet. Weiterhin sorgt der Tragrahmen dafür, dass das gesamte Abdeckelements in eine Wartungsstellung verbracht werden kann, die eine gute Zugänglichkeit zu den Pflückeinheiten des Vorsatzgerätes erlaubt.

Gemäß einer vorteilhaften Weiterbildung der Erfindung ist vorgesehen, dass jedes Abdeckelement eine Einstelleinrichtung umfasst, mittels der die Arbeitsstellung der Abdeckspitze einstellbar ist. Die Einstelleinrichtung umfasst einen Bügel, der an dem Tragrahmen des Abdeckelements schwenkbar gelagert ist, und eine Zugstange, auf der eine Gewindehülse verstellbar angeordnet ist. Die Zugstange ist an der Abdeckhaube schwenkbar gelagert und die Gewindehülse mit dem Bügel gekoppelt. Die Abdeckspitze liegt in ihrer Arbeitsstellung auf dem Bügel auf.

Die zusätzliche Einstelleinrichtung erlaubt durch ein Verstellen der Gewindehülse auf der Zugstange und die entsprechende Kopplung von Gewindehülse und Bügel die Höhe des Bügels einzustellen, wodurch die Arbeitsstellung der Abdeckspitze eingestellt werden kann. Die Einstelleinrichtung erlaubt demnach auf besonders einfache und unkomplizierte Art und Weise sowie mit wenig Kraftaufwand die Arbeitsstellung der Abdeckspitze festzulegen, wobei durch die Art und Weise der Einstellung sichergestellt werden kann, dass die verschiedenen nebeneinander angeordneten Abdeckspitzen der verschiedenen nebeneinander angeordneten Abdeckelemente vor Beginn des Erntevorgangs in eine im Wesentlichen identische Arbeitsstellung verbracht werden können.

Gemäß einer vorteilhaften Weiterbildung der Erfindung ist vorgesehen, dass jedem Abdeckelement eine Verriegelungseinrichtung zugeordnet ist, mittels welcher der Tragrahmen des Abdeckelements in seiner Arbeitsstellung festlegbar ist. Die Verriegelungseinrichtung umfasst dabei ein mit der Rahmenstruktur des Vorsatzgerätes verbundenes plattenförmiges Aufnahmeelement mit einer Ausnehmung und einen mit dem Aufnahmeelement schwenkbar gekoppelten Handhebel. In der Arbeitsstellung des Tragrahmens greift ein an dem Tragrahmen ausgebildetes Arretierelement in die Ausnehmung des Aufnahmeelements ein und ist mittels des Handhebels arretiert.

Vorzugsweise ist vorgesehen, dass in der Wartungsstellung des Tragrahmens des Abdeckelements die Arretierung gelöst und der Tragrahmen über ein Stabilisierungselement festgelegt ist.

Vorzugsweise ist vorgesehen, dass das Stabilisierungselement eine Gasdruckfeder oder dergleichen ist.

Die Verriegelungseinrichtung stellt sicher, dass der Tragrahmen und somit auch das Abdeckelement insgesamt zuverlässig in ihrer Arbeitsstellung fixiert werden können, gleichzeitig aber eine einfache Möglichkeit geschaffen wird, diese Fixierung zu lösen, um dann besagten Tragrahmen und somit auch besagtes Abdeckelements in die Wartungsstellung zu verbringen. Zum Lösen und Fixieren muss dabei lediglich mit wenig Kraftaufwand der Handhebel betätigt werden, sodass sich die Arretierung zwischen Tragrahmen und Verriegelungseinrichtung einstellt bzw. löst. Die Nutzung eines zusätzlichen Stabilisierungselements sorgt weiterhin dafür, dass das Abdeckelements während eines Wartungsvorgangs stets stabil in der Wartungsstellung gehalten wird, sodass keine zusätzlichen Komponenten zu Fixierung des Abdeckelements während eines Wartungsvorgangs notwendig werden, somit der Wartungsvorgang unkompliziert vorgenommen werden kann.

Weiterhin wird die erfindungsgemäße Aufgabe von einer landwirtschaftlichen Erntemaschine mit einem solchen Vorsatzgerät gemäß dem unabhängigen Patentanspruch 12 gelöst.

Die vorliegende Erfindung wird nachstehend anhand der in den Figuren abgebildeten Ausführungsformen näher beschrieben.

Es zeigen:
- FIG. 1: eine schematische und exemplarische Ansicht eines erfindungsgemäßen Vorsatzgerätes zum Ernten von in Reihen stehendem Erntegut;
- FIG. 2: eine schematische und exemplarische Teilschnittdarstellung durch das erfindungsgemäße Vorsatzgerät, wobei eine Abdeckspitze des erfindungsge- mäßen Vorsatzgerätes gleichzeitig in unterschiedlichen Arbeitsstellungen und ihrer Transportstellung dargestellt ist;
- FIG. 3: eine schematische und exemplarische Darstellung eines Teilbereichs der Abdeckspitze des erfindungsgemäßen Vorsatzgerätes, wobei ein Aufnahmeelement einer Arretiereinrichtung des erfindungsgemäßen Vorsatzgerätes dargestellt ist;
- FIG. 4: eine schematische und exemplarische Teilschnittdarstellung durch das erfindungsgemäße Vorsatzgerät, wobei eine Einstelleinrichtung und eine Verrieglungseinrichtung des erfindungsgemäßen Vorsatzgerätes dargestellt sind; und
- FIG. 5: eine schematische und exemplarische Teildarstellung des erfindungsgemäßen Vorsatzgerätes, wobei ein Abdeckelement des erfindungsgemäßen Vorsatzgerätes in der Wartungsstellung dargestellt ist.

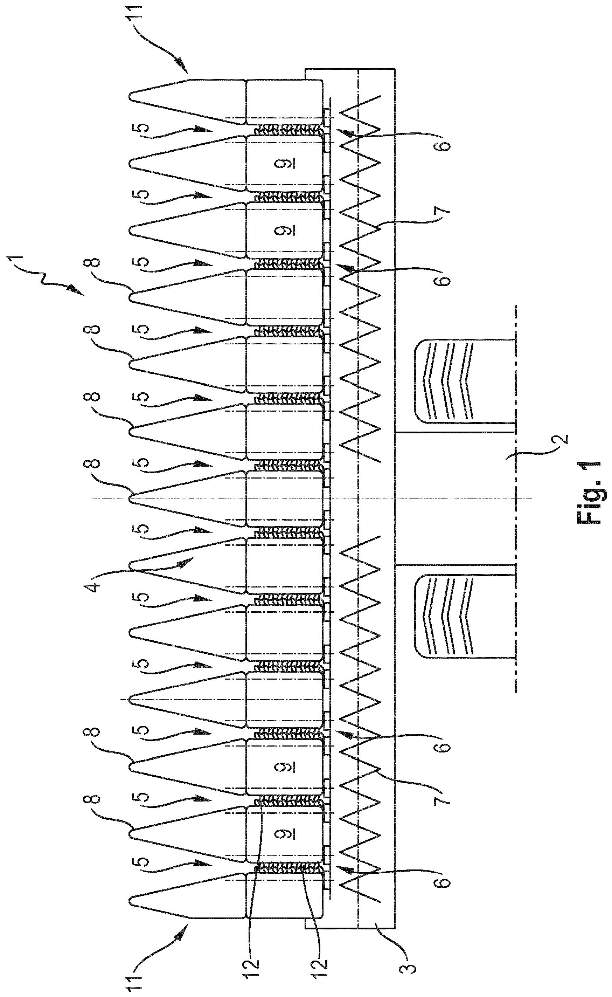

FIG. 1 zeigt eine schematische und exemplarische Darstellung eines erfindungsgemäßen Vorsatzgerätes 1 zum Ernten von in Reihen stehendem Erntegut in einer Draufsicht. Das Vorsatzgerät 1 kommt insbesondere zum Ernten von Mais oder dergleichen Körnerfrüchten zur Anwendung. Das Vorsatzgerät 1 stellt ein Pflückvorsatzgerät für eine - in den FIGs. nicht explizit dargestellte - landwirtschaftliche Erntemaschine, wie einen Mähdrescher oder einen Feldhäcksler, dar. Bei der in FIG. 1 dargestellten Ausführungsform ist dem Vorsatzgerät 1 ein Schrägförderer 2 eines Mähdreschers nachgeordnet, der das Erntegut, beispielsweise Maiskolben, dem Bearbeitungsteil des über Bodeneingriffsmittel auf dem Boden abgestützten Mähdreschers oder Feldhäckslers zuführen kann. Derartige Vorsatzgeräte sind aus dem Stand der Technik bekannt.

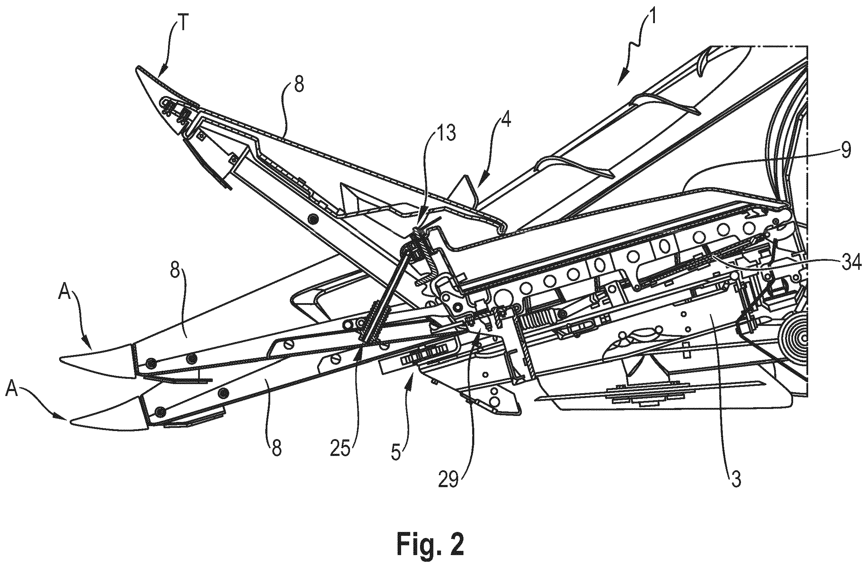

Das Vorsatzgerät 1 umfasst eine Rahmenstruktur 3, mehrteilige, vorzugsweise zweiteilige, Abdeckelemente 4, nebeneinanderliegende Pflückeinheiten 5 mit paarweise angeordneten Pflückwalzen 6, die unterhalb der sie teilweise überdeckenden Abdeckelemente 4 angeordnet sind, und hinter den Pflückeinheiten 5 liegende Querfördervorrichtungen, beispielsweise Querförderschnecken 7. Die Abdeckelemente 4 dienen dabei einerseits der Verbesserung der Stengelführung im Bereich der Pflückeinheiten 5 und andererseits der Vermeidung von übermäßiger Verschmutzung und übermäßigen Kornverlusten während des Erntevorgangs. Hierzu sind Abstände zwischen zwei nebeneinander angeordneten Pflückeinheiten 5 durch besagte Abdeckelemente 4 abgeschirmt bzw. abgedeckt. Die Abdeckelemente 4 umfassen dabei jeweils eine vordere Abdeckspitze 8 sowie eine hintere Abdeckhaube 9, wobei die Abdeckspitze 8 schwenkbar an der Abdeckhaube 9 gelagert ist. Die Abdeckspitze 8 kann zwischen einer Arbeitsstellung A und einer Transportstellung T verschwenkt werden, die Verschwenkung erfolgt vorzugsweise manuell durch einen Bediener. Die Arbeitsstellung A, die, wie nachfolgend noch beschrieben, eingestellt werden kann, und die Transportstellung T sind in FIG. 2 beispielhaft dargestellt.

Die hintere Abdeckhaube 9 ragt zumindest bereichsweise in die vordere Abdeckspitze 8 hinein, wodurch ein Überlappungsbereich 10 von Abdeckhaube 9 und Abdeckspitze 8 ausgebildet wird. Die Abdeckspitze 8 und die Abdeckhaube 9 eines Abdeckelements 4 sind fluchtend zueinander ausgerichtet. Die Abdeckhaube 9 ist als ein zur Längsachse der Abdeckhaube 9 achsensymmetrisches nach unten offenes Hohlprofil ausgeführt. Die Abdeckhaube 9 weist ein bogenförmiges Profil auf, welches sich in Richtung der Längsachse erstreckt. Das Ausmaß der Abdeckhaube 9 ist ausgehend von einem vorderen der Abdeckspitze 8 zugewandten Ende hin zu einem der Rahmenstruktur 3 zugewandten hinteren Ende im Wesentlichen konstant. Neben den die Abstände zwischen zwei nebeneinander angeordneten Pflückeinheiten 5 abdeckenden Abdeckelementen 4 gibt es noch äußere Abdeckelemente 11, die ebenfalls eine vordere Abdeckspitze und eine hintere Abdeckhaube umfassen. Zur Abgabe des gepflückten Erntegutes an den Schrägförderer 2 des Mähdreschers oder Feldhäckslers weist die Rahmenstruktur 3 eine im Wesentlichen mittig angeordnete Öffnung auf. Zwischen zwei benachbarten Abdeckhauben 9 ist ein Kanal 12 ausgebildet, durch den die mittels der Pflückeinheiten 5 von den Stängeln getrennten Früchte hin zu den Querförderschnecken 7 geleitet werden.

Damit die Abdeckspitze 8 in ihrer Transportstellung T fixiert werden kann, ist erfindungsgemäß eine Arretiereinrichtung 13 vorgesehen, die in den FIGs. 2 bis 4 beispielhaft dargestellt ist. Obwohl die Arretiereinrichtung 13 nachfolgend unter Bezugnahme auf die Abdeckelemente 4 des Vorsatzgerätes 1 beschrieben werden, sind die Arretiereinrichtung 13 und die weiteren beschriebenen erfindungsgemäßen Aspekte gleichermaßen auch auf die äußeren Abdeckelemente 11 übertragbar.

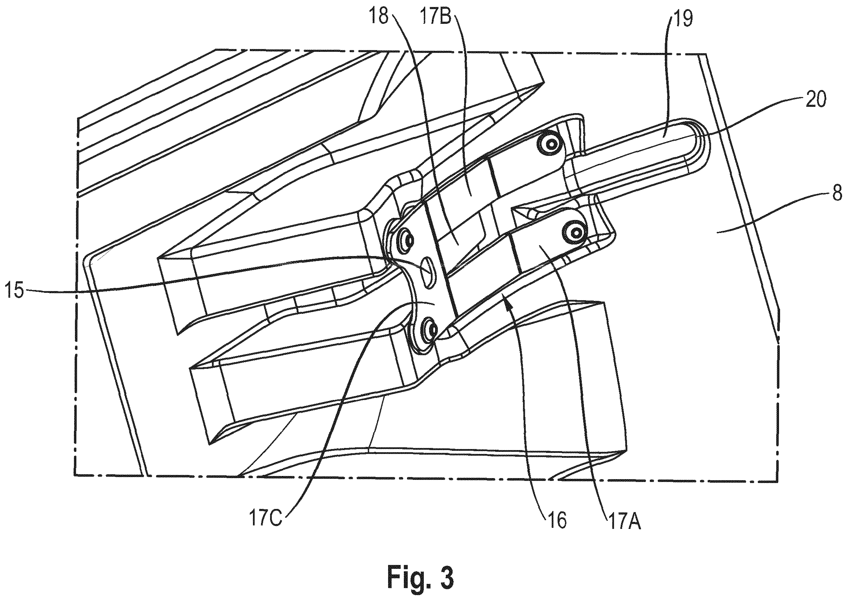

Zum Fixieren der Abdeckspitze 8 in ihrer Transportstellung T umfasst die Arretiereinrichtung 13 ein federbelastetes Arretierelement 14, welches der Abdeckhaube 9 zugeordnet ist und welches in der Transportstellung T der Abdeckspitze 8 in eine der Abdeckspitze 8 zugeordnete Arretieraufnahme 15 eingreift. Die Arretiereinrichtung 13 ist im Überlappungsbereich 10 von Abdeckhaube 9 und Abdeckspitze 8 angeordnet. Erfindungsgemäß, wie insbesondere in FIG. 3 dargestellt, umfasst die Arretiereinrichtung 13 ein Aufnahmeelement 16, welches innenseitig an der Abdeckspitze 8 bzw. an der Innenseite der Abdeckspitze 8, also an der in Richtung der Pflückeinheiten 5 weisenden Oberfläche der Abdeckspitze 8, angeordnet bzw. befestigt ist. Die Befestigung des Aufnahmeelements 16 kann dabei wahlweise kraft-, form- und/oder stoffschlüssig, beispielsweise über ein Verschrauben des Aufnahmeelements 16 mit der Abdeckspitze 8, erfolgen. Das Aufnahmeelement 16 umfasst dabei die Arretieraufnahme 15, in die das federbelastete Arretierelement 14 in der Transportstellung T der Abdeckspitze 8 eingreift. Das Aufnahmeelement 16 ist weiterhin dazu ausgebildet, das federbelastete Arretierelement 14 bei einem Verschwenken der Abdeckspitze 8 aus ihrer Arbeitsstellung A in ihre Transportstellung T zumindest abschnittsweise in Richtung der Arretieraufnahme 15 seitlich zu führen und entgegen der Federkraft zu belasten, sodass das federbelastete Arretierelement 14 bei Erreichen der Arretieraufnahme 15 in diese rastend eingreift. Das Aufnahmeelement 16 ist vorzugsweise aus einem Metall, besonders bevorzugt einer Stahllegierung, und in Gestalt eines Bleches ausgebildet.

In einer Ausführungsform, die insbesondere in FIG. 3 dargestellt ist, ist das Aufnahmeelement 16 gabelförmig ausgebildet. Die gabelförmige Struktur des Aufnahmeelements 16 wird durch einen ersten Schenkel 17A und einen zweiten Schenkel 17B des Aufnahmeelements 16 ausgebildet, die über einen Steg 17C miteinander verbunden sind. Die Arretieraufnahme 15 ist dabei im Steg 17C des Aufnahmeelements 16 mittig zwischen den beiden Schenkeln 17A, 17B ausgebildet. Zur abschnittsweisen seitlichen Führung des federbelasteten Arretierelements 14 in Richtung der Arretieraufnahme 15 und zur Belastung des federbelasteten Arretierelements 14 entgegen der Federkraft umfasst das Aufnahmeelement 16 eine zwischen den beiden Schenkeln 17A, 17B des Aufnahmeelements 16 ausgebildete Lasche 18, die relativ zu beiden Schenkeln 17A, 17B des Aufnahmeelements 16 geneigt ist. Bei einem Verschwenken der Abdeckspitze 8 aus der Arbeitsstellung A in die Transportstellung T wird das federbelastete Arretierelement 14 zeitweise über ein Zusammenwirken der Lasche 18 und der beiden Schenkel 17A, 17B einerseits in Richtung der Arretieraufnahme 15 seitlich geführt und andererseits entgegen der Federkraft belastet, wodurch ein rastender Eingriff des federbelasteten Arretierelements 14 in der Arretieraufnahme 15 möglich wird.

Die Abdeckspitze 8 weist innenseitig bereichsweise eine Formgebung 19 auf, in der das federbelastete Arretierelement 14 in der Arbeitsstellung A der Abdeckspitze 8 angeordnet ist. Die Formgebung 19 ist dabei derart ausgestaltet, dass das federbelastete Arretierelement 14 bei einem Verschwenken der Abdeckspitze 8 aus ihrer Arbeitsstellung A in ihre Transportstellung T zumindest abschnittsweise in Richtung der Arretieraufnahme 15 seitlich geführt wird. Neben dieser Führungsfunktion kann die Formgebung 19 ferner einen Anschlag 20 bilden, an dem das federbelastete Arretierelement 14 in einer eingestellten minimalen Arbeitsstellung A der Abdeckspitze 8 anliegt. Hierdurch kann, insbesondere bei einer Montage des Abdeckelements 4, sichergestellt werden, dass sich die Abdeckspitze 8 nicht unterhalb dieser minimalen Arbeitsstellung A relativ zur Abdeckhaube 9 verschwenken kann, was zu einer vereinfachten Montage des Abdeckelements 4 führt. Besagte Formgebung 19 an der Innenseite der Abdeckspitze 8 nimmt vorzugsweise die Gestalt einer Nut an, wie in FIG. 3 dargestellt. Sofern das Aufnahmeelement 16 die zuvor beschriebene gabelförmige Ausgestaltung aufweist, fluchtet die Formgebung 19 an der Innenseite der Abdeckspitze 8 im Wesentlichen mit der Lasche 18 des an der Innenseite der Abdeckspitze 8 angeordneten Aufnahmeelements 16. Hierdurch wird das federbelastete Arretierelement 14 entlang der gesamten Verschwenkbewegung der Abdeckspitze 8 ausgehend von ihrer Arbeitsstellung A in ihre Transportstellung T seitlich in Richtung der Arretieraufnahme 15 geführt.

Alternativ zu der Anordnung des Aufnahmeelements 16, kann die Abdeckspitze 8 innenseitig derart geformt sein bzw. eine derartige Formgebung aufweisen, dass die Arretieraufnahme 15 von der Abdeckspitze 8 selbst ausgebildet wird bzw. dort ausgebildet ist und die abschnittsweise seitliche Führung und Belastung entgegen der Federkraft sicherstellt. Die alternative Ausgestaltung ohne Aufnahmeelement 16, kann beispielsweise eine Formgebung an der Innenseite der Abdeckspitze 8 umfassen, welche die beschriebene gabelförmige und in FIG. 3 beispielhaft gezeigte Ausgestaltung des Aufnahmeelements 16 nachempfindet. Diese weitere Formgebung würde sich entsprechend an die zuvor beschriebene Formgebung 19 an der Innenseite der Abdeckspitze 8 anschließen, sodass auch hier das federbelastete Arretierelement 14 entlang der gesamten Verschwenkbewegung der Abdeckspitze 8 ausgehend von ihrer Arbeitsstellung A in ihre Transportstellung T seitlich in Richtung der Arretieraufnahme 15 geführt. Um den Verschleiß der Abdeckspitze 8 zu reduzieren könnte es bei dieser Ausgestaltung vorgesehen sein, dass die Oberfläche, entlang welcher das federbelastete Arretierelement 13 bei der Schwenkbewegung der Abdeckspitze 8 gleitet, mit einer zusätzlichen Oberflächenbeschichtung versehen ist.

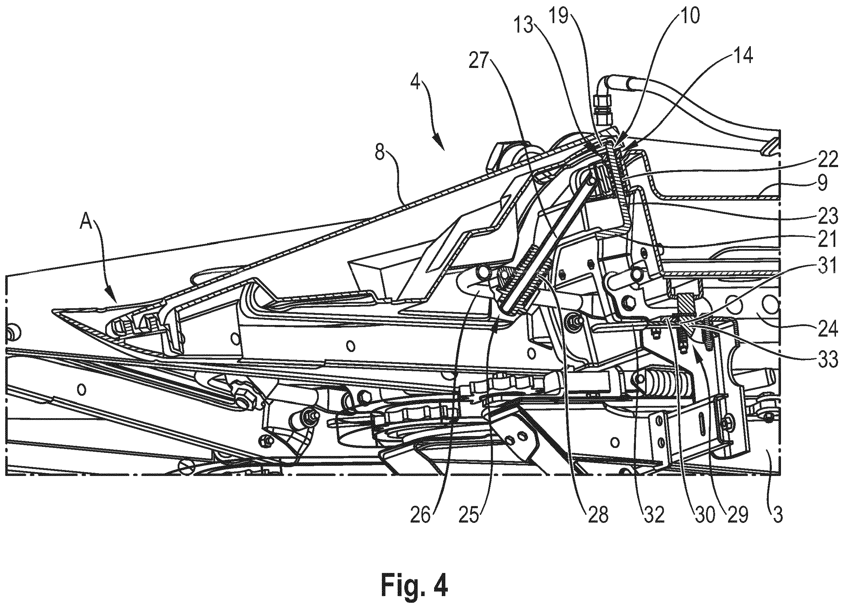

Wie insbesondere in den FIGs. 2 und 4 dargestellt, umfasst das federbelastete Arretierelement 14 einen Betätigungsabschnitt 21 zum Lösen der Arretiereinrichtung 13 in der Transportstellung T der Abdeckspitze 8. Der Betätigungsabschnitt 21 kann beispielsweise als Handgriff ausgestaltet sein, der von einem Bediener zum Lösen der Arretiereinrichtung 13 gezogen werden kann, wodurch sich das federbelastete Arretierelement 14 aus der Arretieraufnahme 15 hinausbewegt und somit die Arretierung der Abdeckspitze 8 in ihrer Transportstellung T gelöst wird. Die Abdeckspitze 8 kann dann wieder in ihre Arbeitsstellung A zurück verschwenkt werden. In der in den FIGs. 2 bis 4 dargestellten Ausführungsform der Arretiereinrichtung 13 ist das federbelastete Arretierelement 14 aus einem von einer Spiralfeder 22 umgebenen Bolzen 23 ausgebildet. Das so ausgebildete federbelastete Arretierelement 14 ist in einer Ausnehmung in der Abdeckhaube 9 eingesetzt sein, wobei der Bolzen 23 von der Spiralfeder 22 in Richtung der Abdeckspitze 8 gedrängt wird. Andere Ausgestaltungen des federbelasteten Arretierelements 14 sind allerdings gleichermaßen vorstellbar.

Die zuvor beschriebenen Abdeckelemente 4 umfassen neben einer vorderen Abdeckspitze 8 und einer hinteren Abdeckhaube 9 einen Tragrahmen 24 der an der Rahmenstruktur 3 des Vorsatzgerätes 1 schwenkbar gelagert ist. Der Tragrahmen 24 ist dabei zwischen einer Arbeitsstellung AT und einer Wartungsstellung WT verlagerbar bzw. schwenkbar. Die Abdeckhaube 9 ist an dem Tragrahmen 24 des Abdeckelements 4 fixiert, wodurch sie sich bei einem Verschwenken des Tragrahmen 24 entsprechend mit diesem mitbewegt und das gesamte Abdeckelement 4 in die Wartungsstellung WT verlagert wird.

Neben der Arretiereinrichtung 13 umfasst jedes Abdeckelements 4 des Vorsatzgerätes 1 eine Einstelleinrichtung 25, mittels der die Arbeitsstellung A der Abdeckspitze 8 einstellbar ist. Die Einstelleinrichtung 25 ist insbesondere in FIG. 4 dargestellt und umfasst einen Bügel 26, der an dem Tragrahmen 24 des Abdeckelements 4 schwenkbar gelagert ist. Weiterhin umfasst die Einstelleinrichtung 25 eine Zugstange 27, auf der eine Gewindehülse 28 verstellbar angeordnet ist. Die Zugstange 27 ist wiederum an der Abdeckhaube 9 schwenkbar gelagert und die auf der Zugstange 27 verstellbar angeordnete Gewindehülse 28 ist mit dem Bügel 26 der Einstelleinrichtung gekoppelt. In ihrer Arbeitsstellung A liegt die Abdeckspitze 8 auf dem Bügel 26 auf. Durch ein Verstellen der Gewindehülse 28 auf der Zugstange und die entsprechende Kopplung von Gewindehülse 28 und Bügel 26 lässt sich die Höhe des Bügels einstellen, wodurch die Arbeitsstellung A der Abdeckspitze 8 eingestellt werden kann. Die Einstelleinrichtung 25 erlaubt demnach auf besonders einfache und unkomplizierte Art und Weise die Arbeitsstellung A der Abdeckspitze 8 festzulegen, wobei durch die Art und Weise der Einstellung sichergestellt werden kann, des die verschiedenen nebeneinander angeordneten Abdeckspitzen 8 der verschiedenen nebeneinander angeordneten Abdeckelemente 4 vor Beginn des Erntevorgangs in eine im Wesentlichen identische Arbeitsstellung A eingestellt werden können.

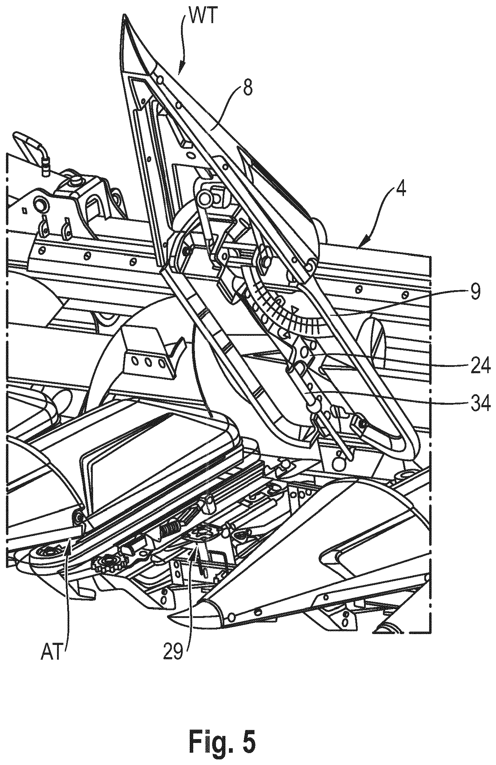

Wie bereits angedeutet und insbesondere in FIG. 5 dargestellt, lässt sich der Tragrahmen 24 zwischen einer Arbeitsstellung AT und einer Wartungsstellung WT verlagern. Damit der Tragrahmen 24 und somit auch die daran fixierte Abdeckhaube 9 in der Arbeitsstellung AT festlegbar ist, umfasst jedes Abdeckelements eine Verriegelungseinrichtung 29, die insbesondere in FIG. 4 dargestellt ist. Die Verriegelungseinrichtung 29 umfasst dabei ein mit der Rahmenstruktur 3 des Vorsatzgerätes 1 verbundenes plattenförmiges Aufnahmeelement 30, das mit einer Ausnehmung 31 versehen ist. Ferner umfasst die Verriegelungseinrichtung 29 einen Handhebel 32, der schwenkbar mit dem Aufnahmeelement 30 gekoppelt ist. Der Tragrahmen 24 umfasst ferner ein Arretierelement 33, vorzugsweise an seiner Unterseite, dass in der Arbeitsstellung AT des Tragrahmen 24 in die Ausnehmung 31 des Aufnahmeelements 30 eingreift und mittels des Handhebels 32 arretierbar bzw. arretiert ist. Damit der Tragrahmen 24 des Abdeckelements 4 und somit auch das Abdeckelement 4 im Ganzen in die Wartungsstellung WT verschwenkt werden kann, wird der Handhebel 32 betätigt, um die Arretierung von Tragrahmen 24 und Aufnahmeelement 30 zu lösen. Der Tragrahmen 24 und somit das Abdeckelements 4 können dann in die Wartungsstellung WT verschwenkt werden und dort über ein Stabilisierungselement 34, welches vorzugsweise als Gasdruckfeder oder dergleichen ausgebildet ist, festgelegt werden. In der Wartungsstellung WT ergibt sich eine gute Zugänglichkeit zu den Komponenten der Pflückeinheiten 5 des Vorsatzgerätes 1.

Abschließend sei angemerkt, dass die vorstehend beschriebenen Ausführungsformen lediglich zur Beschreibung der beanspruchten Lehre dienen, diese jedoch keinesfalls als einschränkend oder erschöpfend anzusehen sind.

### Bezugszeichenliste

| | | | |
|---|---|---|---|
| 1 | Vorsatzgerät | 21 | Betätigungsabschnitt |
| 2 | Schrägförderer | 22 | Spiralfeder |
| 3 | Rahmenstruktur | 23 | Bolzen |
| 4 | Abdeckelement | 24 | Tragrahmen |
| 5 | Pflückeinheit | 25 | Einstelleinrichtung |
| 6 | Pflückwalze | 26 | Bügel |
| 7 | Querförderschnecke | 27 | Zugstange |
| 8 | Abdeckspitze | 28 | Gewindehülse |
| 9 | Abdeckhaube | 29 | Verriegelungseinrichtung |
| 10 | Überlappungsbereich | 30 | Aufnahmeelement |
| 11 | Äußeres Abdeckelement | 31 | Ausnehmung |
| 12 | Kanal | 32 | Handhebel |
| 13 | Arretiereinrichtung | 33 | Arretierelement |
| 14 | Federbelastetes Arretierelement | 34 | Stabilisierungselement |
| 15 | Arretieraufnahme | A | Arbeitsstellung Abdeckspitze |
| 16 | Aufnahmeelement | T | Transportstellung Abdeckspitze |
| 17A, 17B | Schenkel | | |
| 17C | Steg | AT | Arbeitsstellung Tragrahmen/Abdeckhaube |
| 18 | Lasche | | |
| 19 | Formgebung | WT | Wartungsstellung Tragrahmen/Abdeckelement |
| 20 | Anschlag | | |

## Patentansprüche

1. Vorsatzgerät (1) zum Ernten von in Reihen stehendem Erntegut, wobei das Vorsatzgerät (1) mehrere nebeneinander angeordnete Pflückeinheiten (5) umfasst, wobei das Vorsatzgerät (1) mehrere nebeneinander angeordnete Abdeckelemente (4) umfasst, wobei jeweils ein Abdeckelement (4) einen Abstand zwischen zwei nebeneinander angeordneten Pflückeinheiten (5) abdeckt, wobei jedes Abdeckelement (4) eine vordere Abdeckspitze (8) und eine hintere Abdeckhaube (9) umfasst, wobei die Abdeckspitze (8) schwenkbar an der Abdeckhaube (9) gelagert ist, wobei die Abdeckspitze (8) relativ zur Abdeckhaube (9) zwischen einer Arbeitsstellung (A) und einer Transportstellung (T) verschwenkbar ist, wobei jedes Abdeckelement (4) eine Arretiereinrichtung (13) umfasst, die dazu ausgebildet ist, die Abdeckspitze (8) in ihrer Transportstellung (T) zu fixieren, wobei die Arretiereinrichtung (13) ein federbelastetes Arretierelement (14) umfasst, welches der Abdeckhaube (9) zugeordnet ist und welches in der Transportstellung (T) der Abdeckspitze (8) in eine der Abdeckspitze (8) zugeordnete Arretieraufnahme (15) eingreift, wobei die Arretiereinrichtung (13) ein Aufnahmeelement (16) umfasst, das innenseitig an der Abdeckspitze (8) angeordnet ist, wobei das Aufnahmeelement (16) die Arretieraufnahme (15) umfasst, wobei das Aufnahmeelement (16) dazu ausgebildet ist, das federbelastete Arretierelement (14) bei einem Verschwenken der Abdeckspitze (8) aus ihrer Arbeitsstellung (A) in ihre Transportstellung (T) zumindest abschnittsweise in Richtung der Arretieraufnahme (15) seitlich zu führen und entgegen der Federkraft zu belasten.

2. Vorsatzgerät (1) nach Anspruch 1, **dadurch gekennzeichnet, dass** die Abdeckhaube (9) zumindest bereichsweise in die Abdeckspitze (8) hineinragt, wobei die Arretiereinrichtung (13) im Überlappungsbereich (10) von Abdeckhaube (9) und Abdeckspitze (8) angeordnet ist.

3. Vorsatzgerät (1) nach Anspruch 1 oder 2, **dadurch gekennzeichnet, dass** das Aufnahmeelement (16) gabelförmig ausgebildet ist, wobei das Aufnahmeelement (16) einen ersten und einen zweiten Schenkel (17A, 17B) umfasst, die über einen Steg (17C) miteinander verbunden sind, wobei die Arretieraufnahme (15) im Steg (17C) des Aufnahmeelements (16) mittig zwischen den Schenkeln (17A, 17B) ausgebildet ist, wobei das Aufnahmeelement (16) zur Führung des federbelasteten Arretierelements (14) in Richtung der Arretieraufnahme (15) und zur Belastung des federbelasteten Arretierelements (14) entgegen der Federkraft eine zwischen den Schenkeln (17A, 17B) des Aufnahmeelements (16) relativ zu diesen geneigte Lasche (18) umfasst.

4. Vorsatzgerät (1) nach einem der Ansprüche 1 bis 3, **dadurch gekennzeichnet, dass** die Abdeckspitze (8) innenseitig bereichsweise eine Formgebung (19) aufweist, vorzugsweise in Gestalt einer Nut, in der das federbelastete Arretierelement (14) in der Arbeitsstellung (A) der Abdeckspitze (8) angeordnet ist, wobei die Formgebung (19) derart ausgestaltet ist, dass das federbelastete Arretierelement (14) bei einem Verschwenken der Abdeckspitze (8) aus ihrer Arbeitsstellung (A) in ihre Transportstellung (T) zumindest abschnittsweise in Richtung der Arretieraufnahme (15) seitlich führbar ist.

5. Vorsatzgerät (1) nach Anspruch 3 und 4, **dadurch gekennzeichnet, dass** die Formgebung (19) an der Innenseite der Abdeckspitze (8) mit der Lasche (18) des an der Innenseite der Abdeckspitze (8) angeordneten Aufnahmeelements (16) fluchtet.

6. Vorsatzgerät (1) nach einem der Ansprüche 1 bis 5, **dadurch gekennzeichnet, dass** das federbelastete Arretierelement (14) zum Lösen der Arretiereinrichtung (13) in der Transportstellung (T) der Abdeckspitze (8) einen Betätigungsabschnitt (21) umfasst.

7. Vorsatzgerät (1) nach einem der Ansprüche 1 bis 6, **dadurch gekennzeichnet, dass** das federbelastete Arretierelement (14) aus einem von einer Spiralfeder (22) umgebenen Bolzen (23) ausgebildet ist.

8. Vorsatzgerät (1) nach einem der Ansprüche 1 bis 7, **dadurch gekennzeichnet, dass** jedes Abdeckelement (4) einen Tragrahmen (24) umfasst, der an einer Rahmenstruktur (3) des Vorsatzgerätes (1) schwenkbar zwischen einer Arbeitsstellung (AT) und einer Wartungsstellung (WT) gelagert ist, wobei die Abdeckhaube (9) an dem Tragrahmen (24) fixiert ist.

9. Vorsatzgerät (1) nach Anspruch 8, **dadurch gekennzeichnet, dass** jedes Abdeckelement (4) eine Einstelleinrichtung (25) umfasst, mittels der die Arbeitsstellung (A) der Abdeckspitze (8) einstellbar ist, wobei die Einstelleinrichtung (25) einen Bügel (26) umfasst, der an dem Tragrahmen (24) des Abdeckelements (4) schwenkbar gelagert ist, wobei die Einstelleinrichtung (25) eine Zugstange (27) umfasst, auf der eine Gewindehülse (28) verstellbar angeordnet ist, wobei die Zugstange (27) an der Abdeckhaube (9) schwenkbar gelagert ist und die Gewindehülse (28) mit dem Bügel (26) gekoppelt ist, wobei die Abdeckspitze (8) in ihrer Arbeitsstellung (A) auf dem Bügel (26) aufliegt.

10. Vorsatzgerät (1) nach Anspruch 8 oder 9, **dadurch gekennzeichnet, dass** jedem Abdeckelement (4) eine Verriegelungseinrichtung (29) zugeordnet ist, mittels welcher der Tragrahmen (24) des Abdeckelements (4) in seiner Arbeitsstellung (AT) festlegbar ist, wobei die Verriegelungseinrichtung (29) ein mit der Rahmenstruktur (3) des Vorsatzgerätes (1) verbundenes plattenförmiges Aufnahmeelement (30) mit einer Ausnehmung (31) und einen mit dem Aufnahmeelement (30) schwenkbar gekoppelten Handhebel (32) umfasst, wobei in der Arbeitsstellung (AT) des Tragrahmens (24) ein an dem Tragrahmen (24) ausgebildetes Arretierelement (33) in die Ausnehmung (31) des Aufnahmeelements (30) eingreift und mittels des Handhebels (32) arretiert ist.

11. Vorsatzgerät (1) nach Anspruch 10, **dadurch gekennzeichnet, dass** in der Wartungsstellung (WT) des Tragrahmens (24) des Abdeckelements (4) die Arretierung gelöst und der Tragrahmen (24) über ein Stabilisierungselement (34), vorzugsweise eine Gasdruckfeder oder dergleichen, festgelegt ist.

12. Landwirtschaftliche Erntemaschine, insbesondere Mähdrescher oder Feldhäcksler, mit einem Vorsatzgerät (1), **dadurch gekennzeichnet, dass** das Vorsatzgerät (1) nach einem der Ansprüche 1 bis 11 ausgebildet ist.

## Claims

1. Attachment (1) for harvesting crops standing in rows, wherein the attachment (1) comprises a plurality of picking units (5) arranged next to one another, wherein the attachment (1) comprises a plurality of covering elements (4) arranged next to one another, wherein in each case one covering element (4) covers a distance between two picking units (5) arranged next to one another, wherein each covering element (4) comprises a front covering tip (8) and a rear covering hood (9), wherein the covering tip (8) is pivotably mounted on the covering hood (9), wherein the covering tip (8) is pivotable relative to the covering hood (9) between a working position (A) and a transport position (T), wherein each covering element (4) comprises a locking device (13) which is designed to fix the covering tip (8) in its transport position (T), wherein the locking device (13) comprises a spring-loaded locking element (14), which is assigned to the covering hood (9) and which, in the transport position (T) of the covering tip (8), engages into a locking receptacle (15) assigned to the covering tip (8), wherein the locking device (13) comprises a receiving element (16) which is arranged on the inner side of the covering tip (8), wherein the receiving element (16) comprises the locking receptacle (15), wherein the receiving element (16) is designed to laterally guide the spring-loaded locking element (14) in the direction of the locking receptacle (15), at least in sections, when the covering tip (8) is pivoted out of its working position (A) into its transport position (T), and to load it counter to the spring force.

2. Attachment (1) according to Claim 1, **characterized in that** the covering hood (9) projects at least in regions into the covering tip (8), wherein the locking device (13) is arranged in the overlap region (10) of the covering hood (9) and the covering tip (8).

3. Attachment (1) according to Claim 1 or 2, **characterized in that** the receiving element (16) is of fork-shaped design, wherein the receiving element (16) comprises a first and a second limb (17A, 17B) which are connected to one another via a web (170), wherein the locking receptacle (15) is formed in the web (17C) of the receptacle element (16) centrally between the limbs (17A, 17B), wherein the receiving element (16), for guiding the spring-loaded locking element (14) in the direction of the locking receptacle (15) and for loading the spring-loaded locking element (14) counter to the spring force, comprises a tab (18) which is inclined between the limbs (17A, 17B) of the receiving element (16) relative to the said limbs.

4. Attachment (1) according to one of Claims 1 to 3, **characterized in that** the covering tip (8) has a shape (19) on the inner side in regions, preferably in the form of a groove, in which shape the spring-loaded locking element (14) is arranged in the working position (A) of the covering tip (8), wherein the shape (19) is configured such that, when the covering tip (8) is pivoted out of its working position (A) into its transport position (T), the spring-loaded locking element (14) can be laterally guided at least in sections in the direction of the locking receptacle (15).

5. Attachment (1) according to Claims 3 and 4, **characterized in that** the shape (19) on the inner side of the covering tip (8) is aligned with the tab (18) of the receiving element (16) arranged on the inner side of the covering tip (8).

6. Attachment (1) according to one of Claims 1 to 5, **characterized in that** the spring-loaded locking element (14) comprises an actuation portion (21) for releasing the locking device (13) in the transport position (T) of the covering tip (8).

7. Attachment (1) according to one of Claims 1 to 6, **characterized in that** the spring-loaded locking element (14) is formed from a pin (23) surrounded by a spiral spring (22).

8. Attachment (1) according to one of Claims 1 to 7, **characterized in that** each covering element (4) comprises a supporting frame (24) which is mounted on a frame structure (3) of the attachment (1) so as to be pivotable between a working position (AT) and a maintenance position (WT), wherein the covering hood (9) is fixed on the supporting frame (24).

9. Attachment (1) according to Claim 8, **characterized in that** each covering element (4) comprises an adjustment device (25), by means of which the working position (A) of the covering tip (8) is adjustable, wherein the adjustment device (25) comprises a bracket (26) which is pivotably mounted on the supporting frame (24) of the covering element (4), wherein the adjustment device (25) comprises a pull rod (27), on which a threaded sleeve (28) is adjustably arranged, wherein the pull rod (27) is pivotably mounted on the covering hood (9), and the threaded sleeve (28) is coupled to the bracket (26), wherein the covering tip (8) rests on the bracket (26) in its working position (A).

10. Attachment (1) according to Claim 8 or 9, **characterized in that** each covering element (4) is assigned a latching device (29), by means of which the supporting frame (24) of the covering element (4) can be fixed in its working position (AT), wherein the latching device (29) comprises a plate-shaped receiving element (30), which is connected to the frame structure (3) of the attachment (1) and has a recess (31), and a hand lever (32) which is pivotably coupled to the receiving element (30), wherein, in the working position (AT) of the supporting frame (24), a locking element (33) formed on the supporting frame (24) engages into the recess (31) of the receiving element (30) and is locked by means of the hand lever (32).

11. Attachment (1) according to Claim 10, **characterized in that**, in the maintenance position (WT) of the supporting frame (24) of the covering element (4), the locking action is released and the supporting frame (24) is fixed via a stabilizing element (34), preferably a gas pressure spring or the like.

12. Agricultural harvester, in particular a combine harvester or a field chopper, having an attachment (1), **characterized in that** the attachment (1) is designed according to one of Claims 1 to 11.

## Revendications

1. Appareil adaptable (1) destiné à la récolte de produits agricoles plantés en rangées, l'appareil adaptable (1) comprenant plusieurs unités de cueillage (5) disposées les unes à côté des autres, l'appareil adaptable (1) comprenant plusieurs éléments de recouvrement (4) disposés les uns à côté des autres, où chaque fois un élément de recouvrement (4) recouvre un espacement entre deux unités de cueillage (5) disposées l'une à côté de l'autre, chaque élément de recouvrement (4) comportant une pointe de recouvrement avant (8) et un capot de recouvrement arrière (9), la pointe de recouvrement (8) étant montée avec possibilité de pivotement sur le capot de recouvrement (9), la pointe de recouvrement (8) pouvant être pivotée par rapport au capot de recouvrement (9) entre une position de travail (A) et une position de transport (T), chaque élément de recouvrement (4) comportant un dispositif de blocage (13) qui est agencé pour immobiliser la pointe de recouvrement (8) dans sa position de transport (T), le dispositif de blocage (13) comportant un élément de blocage (14) sollicité par ressort, qui est associé au capot de recouvrement (9) et qui, dans la position de transport (T) de la pointe de recouvrement (8), s'engage dans un logement de blocage (15) associé à la pointe de recouvrement (8),
sachant que le dispositif de blocage (13) comporte un élément formant logement (16) qui est disposé côté intérieur sur la pointe de recouvrement (8), l'élément formant logement (16) comprenant le logement de blocage (15), l'élément formant logement (16) étant agencé pour guider l'élément de blocage (14), sollicité par ressort, latéralement au moins par portions en direction du logement de blocage (15), lors d'un pivotement de la pointe de recouvrement (8) de sa position de travail (A) dans sa position de transport (T), et pour le solliciter à l'encontre de la force élastique.

2. Appareil adaptable (1) selon la revendication 1, **caractérisé en ce que** le capot de recouvrement (9) avance au moins par portions dans la pointe de recouvrement (8), le dispositif de blocage (13) étant placé dans la zone de chevauchement (10) du capot de recouvrement (9) et de la pointe de recouvrement (8).

3. Appareil adaptable (1) selon la revendication 1 ou 2, **caractérisé en ce que** l'élément formant logement (16) est réalisé en forme de fourche, l'élément formant logement (16) comportant un premier et un deuxième bras (17A, 17B) qui sont reliés entre eux par une traverse (17C), le logement de blocage (15) étant réalisé dans la traverse (17C) de l'élément formant logement (16), au milieu entre les bras (17A, 17B), l'élément formant logement (16) comportant une languette (18) située entre les bras (17A, 17B) de l'élément formant logement (16) et inclinée par rapport à ceux-ci, en vue du guidage de l'élément de blocage (14), sollicité par ressort, en direction du logement de blocage (15) et en vue de la sollicitation de l'élément de blocage (14) sollicité par ressort, à l'encontre de la force élastique

4. Appareil adaptable (1) selon une des revendications 1 à 3, **caractérisé en ce que** la pointe de recouvrement (8) présente, sur sa face interne, dans certaines parties, une conformation (19), de préférence sous la forme d'une rainure, dans laquelle est disposé l'élément de blocage (14) sollicité par ressort, dans la position de travail (A) de la pointe de recouvrement (8), la conformation (19) étant agencée de manière à ce que, lors d'un pivotement de la pointe de recouvrement (8) de sa position de travail (A) dans sa position de transport (T), l'élément de blocage (14) sollicité par ressort puisse être guidé latéralement au moins dans certaines parties en direction du logement de blocage (15).

5. Appareil adaptable (1) selon la revendication 3 et 4, **caractérisé en ce que** la conformation (19) sur la face interne de la pointe de recouvrement (8) est alignée avec la languette (18) de l'élément formant logement (16) disposé sur la face interne de la pointe de recouvrement (8).

6. Appareil adaptable (1) selon une des revendications 1 à 5, **caractérisé en ce que** l'élément de blocage (14) sollicité par ressort comporte une partie d'actionnement (21) en vue de la libération du dispositif de blocage (13) dans la position de transport (T) de la pointe de recouvrement (8).

7. Appareil adaptable (1) selon une des revendications 1 à 6, **caractérisé en ce que** l'élément de blocage (14) sollicité par ressort est constitué d'un goujon (23) entouré par un ressort hélicoïdal (22).

8. Appareil adaptable (1) selon une des revendications 1 à 7, **caractérisé en ce que** chaque élément de recouvrement (4) comprend un châssis de support (24) qui est monté sur une structure de châssis (3) de l'appareil adaptable (1), avec possibilité de pivotement entre une position de travail (AT) et une position d'entretien (WT), le capot de recouvrement (9) étant fixé au châssis de support (24).

9. Appareil adaptable (1) selon la revendication 8, **caractérisé en ce que** chaque élément de recouvrement (4) comprend un dispositif de réglage (25) qui permet de régler la position de travail (A) de la pointe de recouvrement (8), le dispositif de réglage (25) comportant un étrier (26) qui est monté avec possibilité de pivotement sur le châssis de support (24) de l'élément de recouvrement (4), le dispositif de réglage (25) comportant une tige de traction (27) sur laquelle une douille filetée (28) est disposée avec possibilité de déplacement, la tige de traction (27) étant montée de manière pivotante sur le capot de recouvrement (9), et la douille filetée (28) étant couplée à l'étrier (26), sachant que dans sa position de travail (A), la pointe de recouvrement (8) est en appui sur l'étrier (26).

10. Appareil adaptable (1) selon la revendication 8 ou 9, **caractérisé en ce qu'**est associé à chaque élément de recouvrement (4), un dispositif de verrouillage (29) au moyen duquel le châssis de support (24) de l'élément de recouvrement (4) peut être immobilisé dans sa position de travail (AT), le dispositif de verrouillage (29) comportant un élément formant logement (30) en forme de plaque, qui est relié à la structure de châssis (3) de l'appareil adaptable (1) et est doté d'un évidement (31), et un levier à main (32) couplé de manière pivotante à élément de recouvrement (4), sachant que dans la position de travail (AT) du châssis de support (24), un élément de blocage (33) réalisé sur le châssis de support (24) s'engage dans l'évidement (31) de l'élément formant logement (30) et est bloqué au moyen du levier à main (32).

11. Appareil adaptable (1) selon la revendication 10, **caractérisé en ce que** dans la position d'entretien (WT) du châssis de support (24) de l'élément de recouvrement (4), le blocage est libéré et le châssis de support (24) est immobilis par l'intermédiaire d'un élément de stabilisation (34), de préférence un vérin à gaz ou un élément analogue.

12. Machine de récolte agricole, en particulier moissonneuse-batteuse ou récolteuse-hacheuse, dotée d'un appareil adaptable (1), **caractérisée en ce que** l'appareil adaptable (1) est réalisé conformément à une des revendications 1 à 11.
